(19) Europäisches Patentamt
European Patent Office
Office européen des brevets

(11) Veröffentlichungsnummer: **0 148 445**
**A2**

# (12) EUROPÄISCHE PATENTANMELDUNG

(21) Anmeldenummer: **84115274.7**

(22) Anmeldetag: **12.12.84**

(51) Int. Cl.⁴: **A 01 N 43/42**
// (A01N43/42, 37:22)

(30) Priorität: **23.12.83 DE 3346696**

(43) Veröffentlichungstag der Anmeldung: **17.07.85**
**Patentblatt 85/29**

(84) Benannte Vertragsstaaten: **DE FR IT**

(71) Anmelder: **BASF Aktiengesellschaft,**
**Carl-Bosch-Strasse 38, D-6700 Ludwigshafen (DE)**

(72) Erfinder: **Kiessling, Ulrich, Dr., Caixa Postal 802,**
***Br*-13100 Campinas, Sao Paulo (BR)**
Erfinder: **Wuerzer, Bruno, Dr., Ruedigerstrasse 13,**
**D-6701 Otterstadt (DE)**

## (54) Herbizide Mittel auf Basis von Dichlorchinolinderivaten.

(57) Die Erfindung betrifft herbizide Mittel, die Wirkstoffmischungen aus Dichlorchinolinderivaten und Propionsäure-3,4-dichlor-anilid enthalten. Die herbiziden Mittel eignen sich zur Bekämpfung unerwünschten Pflanzenwuchses, insbesondere grasartiger Pflanzen, in Reis und Getreidearten.

EP 0 148 445 A2

Herbizide Mittel auf Basis von Dichlorchinolinderivaten

Die Erfindung betrifft herbizide Mittel, die Mischungen aus Propionsäure-3,4-dichlor-anilid und Dichlorchinolinderivaten enthalten, und Verfahren zur Bekämpfung unerwünschten Pflanzenwuchses mit diesen herbiziden Mitteln.

Es ist bekannt, daß Dichlorchinolinderivate sich zur Bekämpfung von grasartigen und breitblättrigen unerwünschten Pflanzen in Reis sowie verschiedenen anderen Kulturen eignen. Die Wirkung wird bei Behandlung der Unkräuter sowohl vor deren Auflauf als auch nach deren Auflauf erzielt (EP-OS 00 60 429). Zur Verbreiterung des Wirkungsspektrums können diese Dichlorchinolinderivate zusammen mit herbiziden Wirkstoffen anderer Klassen ausgebracht werden, wobei als Mischungspartner Wirkstoffe aus allen bekannten Klassen, beispielsweise der Klasse der Diazine, Benzothiadiazinone, 2,6-Dinitroaniline, N-Methylcarbamate, N-Phenylcarbamate, Biscarbamate, Thiolcarbamate, Halogencarbonsäuren, Benzoesäurederivate, Terephthalate, Phenoxyfettsäuren, Triazine, Triazinone, Uracile, 2-Chloracetamide, 2-Chloracetanilide, Anilide, Benzonitrile, Diphenylether, Dinitrophenole, Harnstoffe, Dipyridiniumverbindungen, Cyclohexan-1,3-dione, Benzoxazinone, Benzofuranderivate, sowie aus anderen Klassen in Betracht kommen.

Darüber hinaus ist bekannt, daß Propionsäure-3,4-dichloranilid zur Bekämpfung von bestimmten grasartigen und breitblättrigen Unkräutern in Reis verwendet werden kann (DE-AS 10 39 779). Die Anwendung dieses Kontaktmittels erfolgt im Nachauflaufverfahren. Mit größer werdenden Stadien werden höhere Aufwandmengen empfohlen, wobei Blattverbrennungen an den Kulturpflanzen auftreten können. So liegt die übliche Aufwandmenge bei 3,0 kg Wirkstoff/ha, wenn die Gräser das Ein- bis Dreiblattstadium haben. Bis zu 6,0 kg sind nötig beim Vier- bis Sechsblattstadium oder wenn die Gräser sich bestocken. Propionsäure-3,4-dichloranilid wird auch in der EP-OS 00 60 429 unter der großen Zahl von möglichen Mischungspartnern für Dichlorchinolinderivate genannt.

Es wurde nun gefunden, daß herbizide Mittel, die eine Mischung aus Dichlorchinolinderivaten der Formel

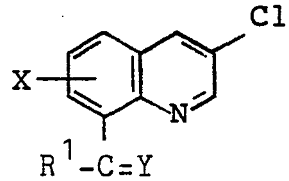 (I),

in der

X für Chlor in den Positionen 5, 6 oder 7 steht,

Y für Sauerstoff, Schwefel, Hydroxyimino, zwei Wasserstoffatome, zwei Chloratome oder die Gruppe =N-A-B steht, worin A eine direkte Bindung oder eine $CH_2$-Gruppe und B einen gegebenenfalls durch Chloratome, Nitro-, Methyl-, Trifluormethyl- oder Methoxygruppen substituierten Phenyl- oder Pyridinrest bedeuten, und

$R^1$ für Wasserstoff, Halogen oder Cyano, für die Gruppe $-NR^2R^3$, worin $R^2$ und $R^3$ gleich oder verschieden sind und Wasserstoff $C_1$-$C_6$-Alkyl, $C_1$-$C_6$-Alkenyl, $C_1$-$C_6$-Hydroxyalkyl, Formyl, Cyclohexyl, Phenyl, Pyridinyl oder beide zusammen den Rest $-(CH_2)_4)$ oder $-(CH_2)_5-$, wobei eine $CH_2$-Gruppe durch ein Sauerstoff- oder Stickstoffatom oder eine $N-CH_3$-Gruppe ersetzt sein kann, bedeuten, für die Carboxylgruppe oder die Gruppe OM steht, worin M Wasserstoff, ein Metall der 1. oder 2. Hauptgruppe des Periodensystems, $C_1$-$C_8$-Alkyl, einen gegebenenfalls durch Halogen, Nitro, $C_1$-$C_4$-Alkyl oder Trihalogenmethyl substituierten Phenylrest oder einen Rest $H_2\overset{\oplus}{N}R^2R^3$, in dem $R^2$ und $R^3$ die oben angegebene Bedeutungen haben, bedeuten

oder in der Y und $R^1$ zusammen mit dem C-Atom eine Nitrilgruppe bedeuten, und

Propionsäure-3,4-dichloranilid enthalten,

eine synergistische Wirkung bei der Bekämpfung von unerwünschten grasartigen Pflanzen zeigen. Dieser Effekt ist insbesondere gegenüber Echinochloa-Arten ausgeprägt und tritt bei der Behandlung von Pflanzen in größeren Wachstumsstadien auf.

Bevorzugte Dichlorchinolinderviate der Formel I sind 3,7-Dichlor-chinolinderivate. In diesen Chinolinderivaten bedeuten Y Sauerstoff, zwei Wasserstoffatome, zwei Chloratome oder die Gruppe =N-A-B, wobei A eine direkte Bindung und B eine gegebenenfalls durch Chloratome, Nitro-, Methyl-, Trifluormethyl- oder Methoxygruppen substituierten Pyridinrest, insbesondere einen unsubstituierten Pyridinrest, und $R^1$ die Gruppe OM, wobei M Wasserstoff, ein Metall der 1. Hauptgruppe des Periodensystems, vorzugsweise Natrium oder Kalium, unverzweigtes oder verzweigtes $C_1$-$C_8$-Alkyl, vorzugsweise unverzweigtes oder verzweigtes $C_1$-$C_4$-Alkyl, Wasserstoff, Halogen, insbesondere Chlor oder Jod, oder die Gruppe $-NR^2R^3$, wobei $R^2$ und $R^3$ gleich oder verschieden sind und Wasserstoff, $C_1$-$C_6$-Alkyl, vorzugsweise $C_1$-$C_4$-Alkyl, insbesondere Methyl, und $R^2$ und $R^3$ zusammen den Rest $-(CH_2)_5-$, in dem eine $CH_2$-Gruppe durch Sauerstoff ersetzt sein kann, vorzugsweise $-(CH_2)_2-O-(CH_2)_2-$, bedeuten, oder einen Rest $H_2\overset{\oplus}{N}R^2R^3$, wobei $R^2$ und $R^3$ gleich oder verschieden sind und Wasserstoff, $C_1$-$C_6$-Alkyl, vorzugsweise $C_1$-$C_4$-Alkyl, insbesondere Methyl, oder $C_1$-$C_6$-Hydroxyalkyl, vorzugsweise $C_1$-$C_4$-Hydroxyalkyl, insbesondere 2-Hydroxy-ethyl, bedeuten.

Insbesondere bevorzugt sind 3,7-Dichlor-8-carboxy-chinolin, 3,7-Dichlor-8--methoxycarbonyl-chinolin, 3,7-Dichlor-8-ethoxycarbonyl-chinolin, 3,7-Dichlor-8-(n-propoxy-carbonyl)-chinolin, 3,7-Dichlor-8-(t-butoxy-carbonyl)--chinolin, das 2-Hydroxy-ethyl-ammoniumsalz, das Di-(2-hydroxy-ethyl)--ammoniumsalz, das Dimethylammoniumsalz sowie das Natriumsalz der 3,7-Dichlor-8-chinolincarbonsäure, 3,7-Dichlor-8-formyl-chinolin, 3,7-Dichlor-8--dichlormethyl-chinolin, 3,7-Dichlor-chinolin-8-yl-methyl-N-(pyrid-2-yl)--imin, 3,7-Dichlor-8-(tert.-butylaminocarbonyl)-chinolin.

Das Mischungsverhältnis der Komponenten kann in weiten Bereichen schwanken. Die Wahl des Mischungsverhältnisses hängt in erster Linie vom Spektrum der zu bekämpfenden Pflanzen sowie vom Entwicklungsstadium der zu bekämpfenden Pflanzen, in Reisfeldern gegebenenfalls auch von der Wasserführung ab. Zweckmäßigerweise liegt das Mischungsverhältnis von Dichlorchinolinderivat der Formel I zu Propionsäure-3,4-dichloranilid zwischen 1:1 und 1:50, vorzugsweise zwischen 1:4 und 1:25.

Die erforderliche Aufwandmenge an reiner Wirkstoffmischung ohne Formulierungshilfsmittel ist abhängig von der Zusammensetzung des Pflanzenbestandes, dessen Entwicklungsstadium, den klimatischen Verhältnissen des Einsatzortes, in Reisfeldern auch von der Wasserführung sowie von den Anwendungstechniken. Im allgemeinen betragen die Aufwandmengen 1 bis 5 kg, vorzgusweise 2,0 bis 4,0, kg Wirkstoffmischung/ha.

Als Kulturen, in denen die erfindungsgemäßen herbiziden Mittel über das Blatt angewendet werden können, kommen im wesentlichen diejenigen in Betracht, in denen die Einzelwirkstoffe eingesetzt werden können, beispielsweise Reis und Getreidearten.

Von Bedeutung ist die Ausbringungstechnik. Die erfindungsgemäßen Mittel werden vorzugsweise nach dem Auflaufen der Kulturpflanzen und der unerwünschten Pflanzen ausgebracht. Eine speziell geeignete Methode ist ferner, die Ausbringung so zu lenken, daß die Blätter der Kulturpflanzen möglichst wenig mit den Mitteln in Berührung kommen, während die dazwischen oder darunter wachsenden unerwünschten Pflanzen oder die freie Bodenfläche getroffen werden (Unterblattspritzung, post-directed, lay-by).

Die erfindungsgemäßen herbiziden Mittel werden beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder

Gießen angewendet. Die Anwendungsformen richten sich ganz nach den Verwendungszwecken; sie sollten in jedem Fall möglichst die feinste Verteilung der erfindungsgemäßen Wirkstoffmischungen gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Die Formulierungen enthalten zwischen 0,1 und 95 Gewichtsprozent, vorzugsweise zwischen 0,5 und 90 Gewichtsprozent, Wirkstoffmischung.

Die erfindungsgemäßen herbiziden Mittel können zusätzlich mit zahlreichen Vertretern weiterer herbizider oder wachstumsregulierender Wirkstoffgruppen gemischt und gemeinsam ausgebracht werden. Beispielsweise kommen als Mischungskomponenten Diazine, 4H-3,1-Benzoxazinderivate, Benzothiadiazinone, 2,6-Dinitroaniline, Phenoxycarbonsäuren, Triazine, Chloracetanilide und Diphenylether in Betracht. Solche Kombinationen dienen zur weiteren Verbreiterung des Wirkungsspektrums.

Außerdem ist es nützlich, die erfindungsgemäßen Mischungen auch noch mit weiteren Pflanzenschutzmitteln gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralstofflösungen, welche zur Behebung von Ernährungs- und Spurenelementmängeln eingesetzt werden. Zur Aktivierung der herbiziden Wirkung können Netz- und Haftmittel sowie nicht phytotoxische Öle und Ölkonzentrate zugesetzt werden.

Die biologische Wirkung der erfindungsgemäßen Mittel wird durch Gewächshaus- und Freilandversuche belegt:

Zur Durchführung der Gewächshausversuche dienen Plastikblumentöpfe mit 300 $cm^3$ Inhalt und lehmigem Sand mit etwa 3,0 % Humus als Substrat als Kulturgefäße. Die Samen der Testpflanzen werden nach Arten getrennt flach eingesät. Es handelt sich dabei um Reis (Oryza sativa) als Kulturpflanze und Hühnerhirsearten (Echinochloa spp., E. crus-galli, E. oryzoides, E. phyllopogon) als unerwünschte Gräser. Bis zur Behandlung zieht man die Pflanzen bis zu einer Wuchshöhe von 8 bis 20 cm an. Dann werden die formulierten Wirkstoffe in Wasser als Verteilermittel suspendiert oder emulgiert und mittels fein verteilender Düsen gespritzt. Die Versuchsgefäße werden im Gewächshaus in einem Temperaturbereich von 20°C bis 35°C aufgestellt. Die Versuchsperiode erstreckt sich über 3 bis 4 Wochen. Während dieser Zeit werden die Pflanzen gepflegt, und ihre Reaktion auf die einzelnen Behandlungen wird ausgewertet. Bewertet wird nach einer Skala von 0 bis 100. Dabei bedeutet 100 eine völlige Zerstörung zumindest der oberirdischen Teile.

Bei den Freilandversuchen handelt es sich um Kleinparzellenversuche in Reisanbaugebieten. Als Kultur dient gesäter Reis (Oryza sativa) mit natürlich vorkommenden unerwünschten Pflanzen, wie Echinochloa spp. (Hühnerhirse). Die Wirkstoffe werden einzeln und in Mischungen in Wasser als Träger- und Verteilermedium emulgiert bzw. suspendiert. Die Ausbringung erfolgt dann von Hand mit Hilfe von Spritzgeräten (knapsacksprayer) im Nachauflaufverfahren bei verschiedenen Stadien der Testpflanzen. Der Wasserstand wird wegen des Kontaktherbizids Propionsäure-3,4-dichloranilid niedrig gehalten. Der Beobachtungszeitraum erstreckt sich über mehrere Wochen. Bewertet wird dabei ebenfalls nach einer Skala von 0 bis 100. Dabei bedeutet 0 keine Schädigung oder normaler Auflauf und 100 kein Aufgang der Pflanzen bzw. völlige Zerstörung zumindest der oberirdischen Sproßteile.

In den Versuchen werden beispielsweise die Wirkstoffe 3,7-Dichlor-8-carboxy-chinolin (Wirkstoff A) und Propionsäure-3,4-dichloranilid (Wirkstoff B) sowie Mischungen aus diesen Wirkstoffen verwendet. Die Ergebnisse sowohl der Gewächshaus - als auch der Freilandversuche zeigen, daß die Mischungen aufgrund synergistischer Effekte beachtliche Wirkungssteigerungen bringen. Insbesondere bei größer werdenden Ungräsern ist die herbizide Wirkung überadditiv.

Tabelle 1 - Gewächshausversuche

| Wirkstoff | Aufwandmenge [kg a.S./ha] | Testpflanzen und Schädigung [%] Oryza sativa (Reis) | Echinochloa spp. |
|---|---|---|---|
| A | 0,06 | 0 | 76 |
| B | 0,5 | 0 | 62 |
| | 1,0 | 30 | 81 |
| A + B | 0,03 + 1,0 | 0 | 92 |
| | 0,06 + 1,0 | 5 | 95 |
| | 0,06 + 0,5 | 10 | 95 |

Tabelle 2 - Freilandversuche

| Wirkstoff | Aufwandmenge [kg a.S./ha] | Testpflanzen und Schädigung [%] Oryza sativa (gesät) alle Stadien | Echinochloa spp. im Zweiblatt-stadium | Beginn bis Mitte Bestockung |
|---|---|---|---|---|
| A | 0,125 | 0 | 77 | 22 |
| | 0,25 | 0 | 88 | 40 |
| | 0,5 | 0 | 91 | 62 |
| B | 3,0 | 0 | 70 | 35 |
| | 4,3 | 0 | 83 | 47 |
| A+B | 0,125 + 3,0 | 0 | 88 | 86 |
| | 0,25 + 3,0 | 0 | 90 | 90 |
| | 0,5 + 3,0 | 0 | 93 | 94 |

Patentansprüche

1. Herbizide Mittel, enthaltend eine Mischung aus einem Dichlorchinolinderivat der Formel

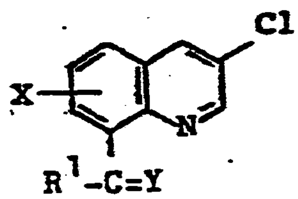

(I),

in der

X für Chlor in den Positionen 5, 6 oder 7 steht,

Y für Sauerstoff, Schwefel, Hydroxyimino, zwei Wasserstoffatome, zwei Chloratome oder die Gruppe =N-A-B steht, worin A eine direkte Bindung oder eine $CH_2$-Gruppe und B einen gegebenenfalls durch Chloratome, Nitro-, Methyl-, Trifluormethyl- oder Methoxygruppen substituierten Phenyl- oder Pyridinrest bedeuten, und

$R^1$ für Wasserstoff, Halogen oder Cyano, für die Gruppe $-NR^2R^3$, worin $R^2$ und $R^3$ gleich oder verschieden sind und Wasserstoff $C_1$-$C_6$-Alkyl, $C_1$-$C_6$-Alkenyl, $C_1$-$C_6$-Hydroxyalkyl, Formyl, Cyclohexyl, Phenyl, Pyridinyl oder beide zusammen den Rest $-(CH_2)_4-$ oder $-(CH_2)_5-$, wobei eine $CH_2$-Gruppe durch ein Sauerstoff- oder Stickstoffatom oder eine $N-CH_3$-Gruppe ersetzt sein kann, bedeuten, für die Carboxylgruppe oder die Gruppe OM steht, worin M Wasserstoff, ein Metall der 1. oder 2. Hauptgruppe des Periodensystems, $C_1$-$C_8$-Alkyl, einen gegebenenfalls durch Halogen, Nitro, $C_1$-$C_4$-Alkyl oder Trihalogenmethyl substituierten Phenylrest oder einen Rest $H_2\overset{+}{N}R^2R^3$, in dem $R^2$ und $R^3$ die oben angegebene Bedeutungen haben, bedeuten

oder in der Y und $R^1$ zusammen mit dem C-Atom eine Nitrilgruppe bedeuten,

und

Propionsäure-3,4-dichloranilid.

2. Herbizide Mittel nach Anspruch 1, dadurch gekennzeichnet, daß sie als Dichlorchinolinderivat der Formel I 3,7-Dichlor-8-carboxy-chinolin enthalten.

3. Herbizide Mittel nach Anspruch 1, dadurch gekennzeichnet, daß das Mischungsverhältnis Dichlorchinolinderivat der Formel I zu Propionsäure-3,4-dichloranilid 1:1 bis 1:50 Gewichtsteile beträgt.

4. Herbizide Mittel nach Anspruch 1, dadurch gekennzeichnet, daß das Mischungsverhältnis Dichlorchinolinderivat der Formel I zu Propionsäure-3,4-dichloranilid 1:4 bis 1:25 beträgt.

5. Verfahren zur Bekämpfung unerwünschten Pflanzenwuchses, dadurch gekennzeichnet, daß man die Pflanzen nach dem Auflaufen mit herbiziden Mitteln gemäß Anspruch 1 behandelt.

6. Verfahren nach Anspruch 5, dadurch gekennzeichnet, daß die Aufwandmenge an Wirkstoffmischung in Form der herbiziden Mittel 1 bis 5 kg/ha beträgt.

7. Verfahren zur Bekämpfung unerwünschten Pflanzenwuchses in Reis, dadurch gekennzeichnet, daß man die Pflanzen nach dem Auflaufen des Reises und der unerwünschten Pflanzen mit herbiziden Mitteln gemäß Anspruch 1 behandelt.

8. Verfahren nach Anspruch 7, dadurch gekennzeichnet, daß die unerwünschte Pflanze Echinochloa spp. ist.